# EUROPÄISCHE PATENTANMELDUNG

(11) **EP 2 174 859 A2**
(43) Veröffentlichungstag der Anmeldung: **14.04.2010**
(21) Anmeldenummer: 09012693.9
(22) Anmeldetag: 07.10.2009
(51) Int. Cl.: B62K 5/00, B60G 7/02

(54) **Distanzstück zur Spurverbreiterung und/oder zur Tierferlegung eines Kraftfahrzeuges**

(30) Priorität: 08.10.2008 DE 202008013234 U; 17.12.2008 DE 202008016610 U
(71) Anmelder: Niemerg, Stefan, 48336 Sassenberg (DE)
(72) Erfinder: Niemerg, Stefan, 48336 Sassenberg (DE)
(74) Vertreter: Gesthuysen, von Rohr & Eggert

(57) **Zusammenfassung**

Dargestellt und beschrieben ist ein Distanzstück (10) zur Spurverbreiterung und/oder zur Tieferlegung eines Kraftfahrzeuges (1), insbesondere zur Spurverbreiterung und/oder zur Tieferlegung eines Quads oder eines ATVs. Erfindungsgemäß ist vorgesehen, daß das Distanzstück zwischen wenigstens einem mit einem Ende an einem Radträger des Kraftfahrzeuges (1) angelenkten Querlenker (4, 5) und einem Fahrgestellrahmen (9) anzuordnen ist, wobei das Distanzstück an wenigstens einem Befestigungsabschnitt (11) des Fahrgestellrahmens (9) für den Querlenker (4, 5) und an wenigstens einem Befestigungsabschnitt (12) des Querlenkers (4, 5) für den Fahrgestellrahmen (9) befestigbar ist und wobei durch das Distanzstück der vertikale Abstand a₁ und/oder der horizontale Abstand a₂ zwischen dem Befestigungsabschnitt (11) des Fahrgestellrahmens (9) für den Querlenker (4, 5) und dem Befestigungsabschnitt (12) des Querlenkers (4, 5) für den Fahrgestellrahmen (9) vergrößerbar ist, so daß durch Anordnen des Distanzstückes zwischen dem Querlenker (4, 5) und dem Fahrgestellrahmen (9) der Befestigungsabschnitt (12) des Querlenkers (4, 5) für den Fahrgestellrahmen (9) gegenüber dem Befestigungsabschnitt (11) des Fahrgestellrahmens (9) für den Querlenker (4, 5) nach außen und/oder nach oben verlagerbar ist.

## Beschreibung

Die Erfindung betrifft ein Distanzstück zur Spurverbreiterung und/oder zur Tieferlegung eines Kraftfahrzeuges, insbesondere zur Spurverbreiterung und/oder zur Tieferlegung eines Quad oder eines ATVs.

Ein Quad oder ATV (All Terrain, Vehicle) ist ein kleines Kraftfahrzeug für ein bis zwei Personen mit vier Rädern oder seltener mit vier Gleisketten, häufig mit dicken Ballonreifen als Geländefahrzeug. Quads sind Sportfahrzeuge, ATVs dagegen sind mehr Arbeitsgeräte und für den extremen Einsatz im Gelände gedacht. Die Vorderräder werden in der Regel sowohl beim Quad als auch beim ATV an Doppelquerlenkern geführt, die A-Arms genannt werden. Quads und insbesondere ATVs sind an sich als Off-Road-Fahrzeuge konzipiert und haben bedingt durch die für Geländefahrten benötigte Bodenfreiheit einen vergleichsweise hohen Schwerpunkt. Dieser hohe Schwerpunkt kann, zusammen mit einer falschen Körperhaltung des Fahrers, dazu führen, daß das Fahrzeug bei rascher Kurvenfahrt oder einer Hangquerfahrt kippt. Um Quads oder ATVs straßentauglicher zu machen, kann eine Spurverbreiterung und/oder eine Tieferlegung des Fahrzeugs vorgesehen werden. Beispielsweise können die serienmäßigen Querlenker des Fahrzeugs durch längere Querlenker und/oder Querlenker mit einer anderen Geometrie ausgetauscht werden, um eine entsprechende Spurverbreiterung zu erzielen. Der Ausbau der serienmäßigen Querlenker und der Einbau von Querlenkern mit einer größeren Länge und/oder geänderten Geometrie sind jedoch mit einem hohen Montage- und Kostenaufwand verbunden. Im übrigen sind die Anschaffungskosten für die zur Spurverbreiterung vorgesehenen Querlenker vergleichsweise hoch, da es sich um Sonderbauteile handelt, die in geringen Stückzahlen hergestellt werden.

Aufgabe der vorliegenden Erfindung ist es, ein Distanzstück der eingangs genannten Art zur Verfügung zu stellen, das eine Spurverbreiterung und/oder Tieferlegung eines Kraftfahrzeuges in einfacher Weise und bei geringen Kosten ermöglicht.

Die vorgenannte Aufgabe ist bei einem Distanzstück der eingangs genannten Art dadurch gelöst, daß das Distanzstück zwischen wenigstens einem mit einem Ende an einem Radträger des Kraftfahrzeuges angelenkten Querlenker und einem Fahrgestellrahmen anzuordnen ist, wobei das Distanzstück an wenigstens einem Befestigungsabschnitt des Fahrzeugsrahmens für den Querlenker und an wenigstens einem Befestigungsabschnitt des Querlenkers für den Fahrgestellrahmen befestigbar ist und wobei durch das Distanzstück der vertikale Abstand und/oder der horizontale Abstand zwischen dem Befestigungsabschnitt des Fahrgestellrahmens für den Querlenker und dem Befestigungsabschnitt des Querlenkers für den Fahrgestellrahmen vergrößerbar ist, so daß durch Anordnung des Distanzstückes zwischen dem Querlenker und dem Fahrgestellrahmen der Befestigungsabschnitt des Querlenkers für den Fahrgestellrahmen gegenüber dem Befestigungsabschnitt des Fahrgestellrahmens für den Querlenker nach außen und/oder nach oben verlagerbar ist.

Das erfindungsgemäße Distanzstück kann in einfacher Weise bei einem Kraftfahrzeug nachgerüstet werden, ohne daß ein Austausch der serienmäßig vorhandenen Querlenker des Fahrzeugs erforderlich ist. Dadurch läßt sich eine kostengünstige Spurverbreiterung und/oder Tieferlegung des Fahrzeuges erreichen, Ist das Distanzstück zur Spurverbreiterung vorgesehen, wird durch Einbau des Distanzstücks zwischen den Fahrgestellrahmen und den Querlenker der Abstand des jeweiligen Rades von dem Fahrgestellrahmen vergrößert, was eine entsprechende Anpassung bzw. Verlängerung der mit dem Radträger verbundenen Lenkstange und der zum Radträger führenden Bremsleitung für die Radbremse erforderlich machen kann. Auch kann eine Anpassung des Stoßdämpfersystems, gegebenenfalls der Einbau eines längeren Stoßdämpfers, erforderlich sein. Jedenfalls ist es nicht notwendig, zur Spurverbreiterung den serienmäßig beim Fahrzeug vorgesehenen Querlenker gegen einen verlängerten Querlenker und/oder einen Querlenker mit einer veränderten Geometrie auszutauschen.

Das erfindungsgemäße Distanzstück ist vorzugsweise gleichzeitig zur Spurverbreiterung und zur Tieferlegung des Fahrzeuges vorgesehen und entsprechend ausgebildet. Hierauf wird nachfolgend noch eingegangen. Die Erfindung läßt es jedoch bedarfsweise auch zu, daß das Distanzstück lediglich zur Spurverbreiterung oder zur Tieferlegung des Fahrzeuges ausgebildet ist. Im übrigen wird darauf hingewiesen, daß das erfindungsgemäße Distanzstück vorzugsweise zur Spurverbreiterung und/oder zur Tieferlegung von Quads oder ATVs zum Einsatz kommen kann. Grundsätzlich können jedoch auch andere Fahrzeuge, deren Radträger über Querlenker mit dem Fahrgestellrahmen verbunden sind, mit dem erfindungsgemäßen Distanzstück ausgerüstet werden.

Querlenker sind in der Regel um eine waagerechte Rotationsachse drehbar gelagert und lassen daher eine vertikale Bewegung des Radträgers zu. Die Rotationsachse liegt bei Querlenkern näherungsweise in Fahrtrichtung. Das erfindungsgemäße Distanzstück läßt sich aber auch bei Kraftfahrzeugen zur Spurverbreiterung und/oder zur Tieferlegung einsetzen, die Achslenker mit nicht in Fahrtrichtung liegenden Rotationsachsen aufweisen, wie dies beispielsweise bei Schräglenkern der Fall ist.

Die Erfindung wird nachfolgend anhand der Figuren der Zeichnung exemplarisch beschrieben, wobei die nachfolgend beschriebenen Merkmale bedarfsweise miteinander kombiniert werden können, auch wenn dies nicht im einzelnen beschrieben ist. Die Erfindung ist nicht auf die dargestellte Ausführungsform eines erfindungsgemäßen Distanzstücks beschränkt. In der Figur zeigen
- Fig. 1: eine schematische Teilansicht des Fahrwerks eines Quads seitlich von vorne,
- Fig. 2: eine perspektivische Darstellung eines erfindungsgemäßen Distanzstücks seitlich von oben,
- Fig. 3: eine Draufsicht auf ein erstes Montageblech des in Fig. 2 dargestellten Distanzstücks im Zustand vor der Montage mit einem weiteren Montageblech und nach dem Abbiegen von seitliche Lagerabschnitte bildenden Laschen,
- Fig. 4: eine Draufsicht auf das erstes Montageblech aus Fig. 3 vor dem Abbiegen der Laschen und
- Fig. 5: eine Draufsicht auf ein zweites Montageblech des in Fig. 2 dargestellten Distanzstücks vor dem Abbiegen von seitliche Lagerabschnitte bildenden Laschen.

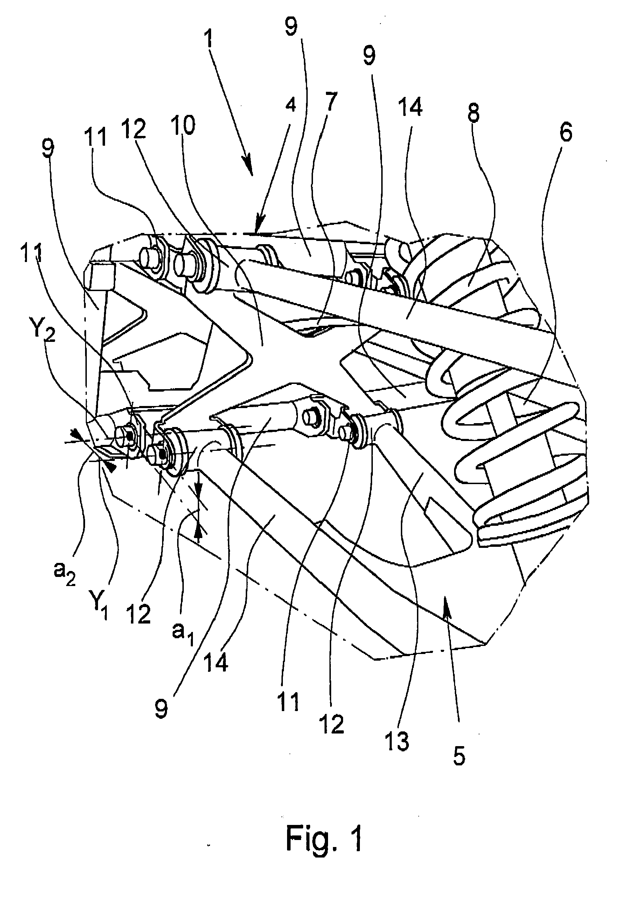

In Fig. 1 ist eine Teilansicht eines Fahrwerks eines Kraftfahrzeugs 1 seitlich von vorne dargestellt, wobei es sich bei dem Fahrzeug 1 um ein Quad handelt, d. h. ein Fahrzeug mit vier Rädern, und wobei in Fig. 1 die Räder nicht dargestellt sind. Jedes Vorderrad ist über Radlager auf einem Radträger gelagert. An jedem Radträger sind in an sich aus dem Stand der Technik bekannter Weise Querlenker 4, 5 angelenkt, wobei sich die Stellung des Rades 2 mit einer Lenkstange 6 in üblicher Weise verändern läßt. In Fig. 1 sind die Querlenker 4, 5 lediglich ausschnittsweise dargestellt. Im übrigen ist eine Bremsleitung 7 vorgesehen, die zum Radträger führt. Auf dem unteren Querlenker 5 stützt sich ein Stoßdämpfer 8 ab.

Das Fahrwerk des Fahrzeugs 1 weist darüber hinaus einen Fahrgestellrahmen 9 aus einer Mehrzahl von miteinander verschweißten Rohren auf, wobei die Querlenker 4, 5 mit dem Fahrgestellrahmen 9 schwenkbar verbunden sind, so daß eine vertikale Bewegung des Radträgers möglich ist. Das Fahrwerk weist auf beiden Seiten des Fahrgestellrahmens 9 einen im wesentlichen gleichen Aufbau auf, wobei in Fig. 1 exemplarisch lediglich eine Seite des Fahrwerks ausschnittsweise dargestellt ist.

Zur Spurverbreiterung und zur Tieferlegung des Fahrzeuges 1 ist ein Distanzstück 10 vorgesehen, wobei das Distanzstück 10 zwischen den jeweils mit einem Ende an dem Radträger angelenkten Querlenkern 4, 5 des Kraftfahrzeuges 1 und dem Fahrgestellrahmen 9 angeordnet ist. Das Distanzstück 10 ist an Befestigungsabschnitten 11 des Fahrgestellrahmens 9 für die Querlenker 4, 5 und an Befestigungsabschnitten 12 der Querlenker 4, 5 für den Fahrgestellrahmen 9 befestigt. Das Distanzstück 10 läßt sich in einfacher Weise bei bestehenden, d. h. serienmäßigen Fahrwerken nachrüsten, wobei vor der Montage des Distanzstücks 10 die Befestigungsabschnitte 11 des Fahrgestellrahmens 9 unmittelbar mit den Befestigungsabschnitten 12 der Querlenker 4, 5 verbunden sind. Zur Montage des Distanzstücks 10 ist es dann notwendig, die Befestigungsabschnitte 11, 12 voneinander zu trennen und das Distanzstück 10 zwischen die Querlenker 4, 5 und den Fahrgestellrahmen 9 in das Fahrwerk des Kraftfahrzeuges 1 einzubauen.

Durch das Distanzstück 10 wird der vertikale Abstand a₁ und der horizontale Abstand a₂ zwischen den Befestigungsabschnitten 11 des Fahrgestellrahmens 9 für die Querlenker 4, 5 und den Befestigungsabschnitten 12 der Querlenker 4, 5 für den Fahrgestellrahmen 9 vergrößert, so daß durch Anordnen des Distanzstückes 10 zwischen den Querlenkern 4, 5 und dem Fahrgestellrahmen 9 die Befestigungsabschnitte 12 der Querlenker 4, 5 für den Fahrgestellrahmen 9 gegenüber den Befestigungsabschnitten 11 des Fahrgestellrahmens 9 für die Querlenker 4, 5 nach außen und nach oben verlagert sind. Dies ist in Fig. 1 dargestellt. Die Verlagerung nach außen führt zu einer Spurverbreiterung und die Verlagerung nach oben gleichzeitig zur Tieferlegung des Kraftfahrzeuges 1. Die Verlagerung bezieht sich dabei jeweils auf die Schwenkachsen Y₁ der Befestigungsabschnitte 12 der schwenkbar gelagerten Querlenker 4, 5 bzw. auf die Befestigungsachsen Y₂ der Befestigungsabschnitte 11 an dem Fahrgestellrahmen 9.

Durch Anordnen des Distanzstückes 10 zwischen den Querlenkern 4, 5 und dem Fahrgestellrahmen 9 lassen sich die Befestigungsabschnitte 12 der Querlenker 4, 5 und damit die Querlenker 4, 5 gegenüber den Befestigungsabschnitten 11 des Fahrgestellrahmens 9 im Verhältnis 3:1 bis 5:1, vorzugsweise ca. 4:1, nach außen und nach oben verlagern, wiederum mit Bezug auf die Schwenkachsen Y₁ bzw. die Befestigungsachsen Y₂. Beispielsweise können die Querlenker 4, 5 um ca. 6 cm nach außen und um ca. 1,5 cm nach oben verlagert sein. Bei dem vorgenannten Verhältnis von 4:1 konnten im Zusammenhang mit der Erfindung sehr gute Fahreigenschaften des Kraftfahrzeuges 1 nachgewiesen werden. Bei geeigneter Wahl des Verhältnisses von Verlagerung der Querlenker 4, 5 nach außen zur Verlagerung der Querlenker 4, 5 nach oben kann ein Austausch des serienmäßig vorgesehenen Stoßdämpfers 8 gegen einen längeren Stoßdämpfer nicht erforderlich sein.

Jeder Querlenker 4, 5 weist vorliegend zwei Lenkerarme 13, 14 auf, wobei jeder Lenkerarm 13, 14 an seinem freien Ende jeweils einen Befestigungsabschnitt 12 für die komplementär ausgebildeten Befestigungsabschnitte 11 am Fahrgestellrahmen 9 aufweist und wobei das Distanzstück 10 an den Befestigungsabschnitten 12 der Lenkerarme 13, 14 einerseits und an den Befestigungsabschnitten 11 des Fahrgestellrahmens 9 andererseits befestigbar ist. Darüber hinaus ist das Distanzstück 10 an dem oberen Querlenker 4 einerseits und an dem unteren Querlenker 5 andererseits befestigt, so daß sich eine sehr hohe Stabilität des Fahrwerks ergibt.

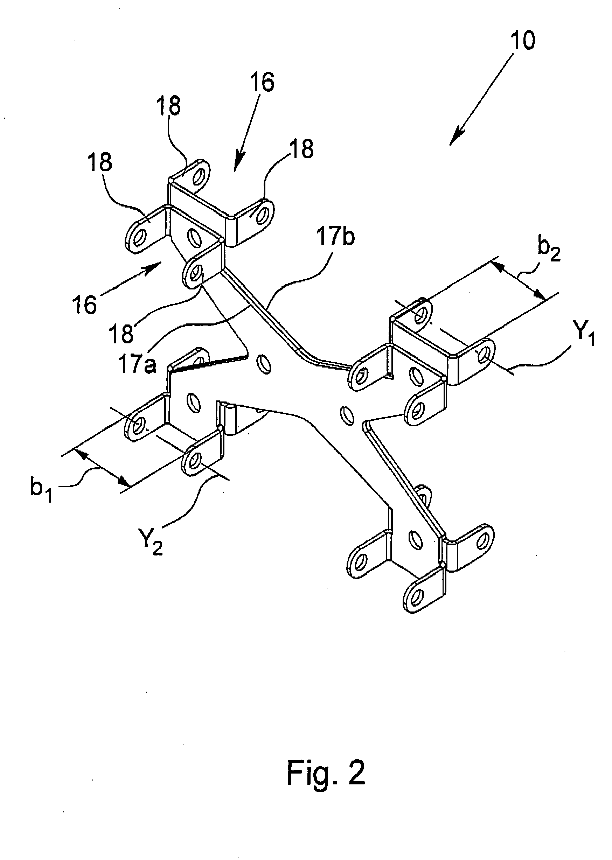

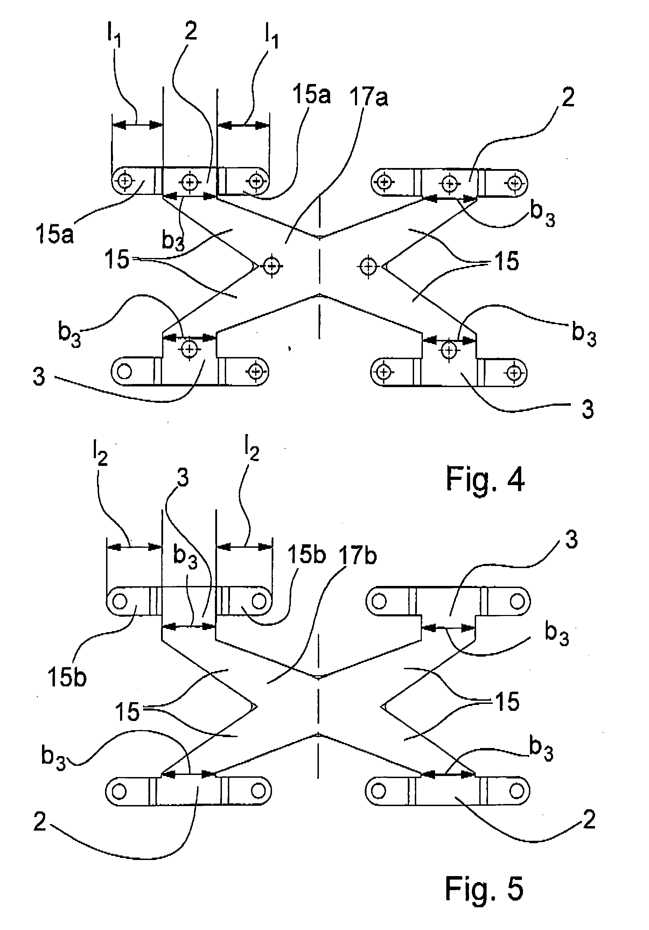

Der Aufbau des Distanzstücks 10 wird anhand der Fig. 2 bis 5 im einzelnen erläutert. Das Distanzstück 10 ist zweiteilig ausgebildet und weist ein im Montagezustand dem Fahrgestellrahmen 9 zugewandtes inneres Montageblech 17a und ein im Montagezustand den Querträgern 4, 5 zugewandtes äußeres Montageblech 17b auf. Die Montagebleche 17a, 17b sind mit den Rückseiten miteinander verbunden. Vorzugsweise sind die Montagebleche 17a, 17b miteinander verschweißt, können aber auch miteinander verschraubt sein. Im übrigen weist das innere Montageblech 17a Öffnungen 20 auf, wobei die beiden Montagebleche 17a, 17b im Bereich der Öffnungen 20 miteinander verschweißt sein können.

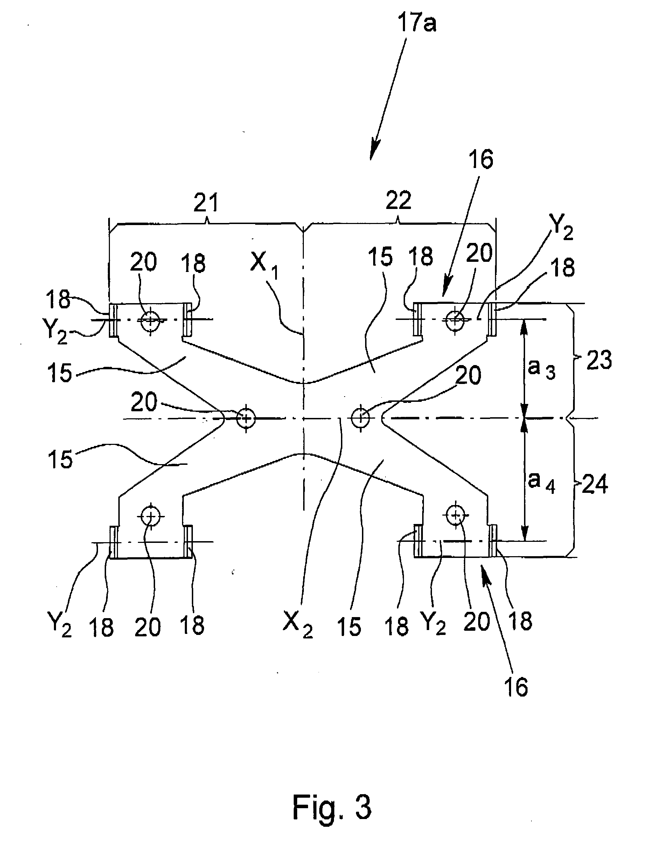

Jedes Montageblech 17a, 17b weist vier kreuzförmig angeordnete Haltearme 15 mit gegenüber den Haltearmen 15 abgewinkelten Halteabschnitten 2, 3 auf. Durch die Verbindung der Lenkerarme 13, 14 der beiden Querlenker 4, 5 miteinander über die kreuzförmig angeordneten Haltearme 15 des Distanzstücks 10 wird eine hohe Stabilität des Fahrwerkes sichergestellt. Die Halteabschnitte 3 sind gegenüber den Halteabschnitten 2 nach außen verlängert. Im übrigen sind jeweils die gegenüberliegenden Halteabschnitte 2, 3 eines Montageblechs 17a, 17b auf einer gemeinsamen Mittelachse angeordnet. Das Montageblech 17a weist seitlich an den Enden der Halteabschnitte 2, 3 jeweils Laschen 15a auf. Das Montageblech 17b weist seitlich an den Enden der Halteabschnitte 2, 3 Laschen 15b auf. Durch Abwinkeln der Laschen 15a, 15b werden Lagerschenkel 18 gebildet, was in Fig. 3 dargestellt ist. Zwei Lagerschenkel 18 begrenzen jeweils einen Lagerabschnitt 16. Die Lagerabschnitte 16 an dem inneren Montageblech 17a sind zum Anschluß an die Befestigungsabschnitte 11 an dem Fahrgestellrahmen 9 vorgesehen. Dementsprechend entspricht die Außenbreite b₁ der Lagerabschnitte 16 an dem inneren Montageblech 17a, bezogen auf die Außenflächen der Laschen 18, dem Abstand zwischen zwei Befestigungsschenkeln am Fahrgestellrahmen 9, die einen Befestigungsabschnitt 11 bilden. Die Lagerabschnitte 16 an dem inneren Montageblech 17a lassen sich somit in einfacher Weise in den Aufnahmebereich einstecken, der zwischen jeweils zwei Befestigungsschenkeln am Fahrgestellrahmen 9 gebildet wird, so wie dies in Fig. 1 dargestellt ist.

Die Innenbreite b₂ zwischen zwei Lagerschenkeln 18 von Lagerabschnitten 16 des äußeren Montageblechs 17b entspricht der Breite der Befestigungsabschnitte 12 an den Enden der Lenkerarme 13, 14. Der Befestigungsabschnitt 12 an einem Lenkerarm 13, 14 wird durch ein Rohrstück gebildet, das quer zur Längsrichtung des Lenkerarms 13, 14 mit diesem verschweißt ist. Die Enden des Rohrstücks sind mit einer Abdeckung versehen und im Montagezustand des Distanzstücks 10 zwischen den Lagerschenkeln 18 der Lagerabschnitte 16 des Montageblechs 17b um die Schwenkachse Y₁ schwenkbar gelagert. Dies ist ebenfalls in Fig. 1 dargestellt. Im Ergebnis entspricht die Breite der Befestigungsabschnitte 12 an den Enden der Lenkerarme 13, 14 der Außenbreite b₁ der Lagerabschnitte 16 an dem inneren Montageblech 17a. Die Befestigungsabschnitte 11, 12 können über Schraubverbindungen mit den Lagerschenkeln 18 verbunden sein.

Um unterschiedlich breite Lagerabsehnitte 16 auszubilden, ist die Länge l₁ der Laschen 15a des Montageblechs 17a kleiner als die Länge l₂ der Laschen 15b des Montageblechs 17b, so daß die Breite b₁ der Lagerabschnitte 16 nach dem Umbiegen der Laschen 15a an dem inneren Montageblech 17a kleiner ist als die Breite b₂ der Lagerabschnitte 16 nach dem Umbiegen der Laschen 15b an dem äußeren Montageblech 17b. Die Breite b₃ der Halteabschnitte 2, 3 im Bereich benachbart zu den Laschen 15a, 15b ist jedoch bei beiden Montageblechen 17a, 17b gleich. Die Montagebleche 17a, 17b weisen mit Bezug auf die Haltearme 15 eine identische Außenkontur auf. Dies ermöglicht es, die Montagebleche 17a, 17b um 180° gedreht miteinander zu verbinden, wobei dann die Lagerabschnitte 16 an dem inneren Montageblech 17a im Montagezustand unterhalb von den Lagerabschnitten 16 an dem äußeren Montageblech 17b angeordnet sind. Dies führt im Montagezustand automatisch zu einer Tieferlegung des Kraftfahrzeuges 1, was sich aus den Fig. 1 und 2 ergibt. Die unterschiedliche Breite b₁, b₂ der Lagerabschnitte 16 an den Montageblechen 17a, 17b ermöglicht die Verbindung mit den Befestigungsabschnitten 11 an dem Fahrgestellrahmen 9 einerseits und an den Befestigungsabschnitten 12 der Lenkerarme 13, 14 andererseits.

Die Montagebleche 17a, 17b bestehen aus Stahlblech mit einer Dicke von 2 bis 5 mm, vorzugsweise von ca. 3 mm, und sind durch Laserschneiden erhältlich.

Das Montageblech 17a weist gemäß Fig. 3 jeweils zwei mit Bezug auf eine vertikale Mittelachse X₁ spiegelsymmetrisch angeordnete Montageblechhälften 21, 22 auf. Im übrigen sind zwei mit Bezug auf eine horizontale Mittelachse X₂ nicht-spiegelsymmetrisch angeordnete Montageblechabschnitte 23, 24 vorgesehen, wobei der Abstand a₃ der Lagerabschnitte 16 eines ersten Montageblechabschnitts 23 zur horizontalen Mittelachse X₂ kleiner ist als der Abstand a₄ der Lagerabschnitte 16 eines zweiten Montageblechabschnitts 24 zur horizontalen Mittelachse X₂, jeweils mit Bezug auf die Befestigungsachse Y₂. Das Montageblech 17b ist komplementär ausgebildet, mit Bezug auf die Schwenkachsen Y₁.

## Patentansprüche

1. Distanzstück (10) zur Spurverbreiterung und/oder zur Tieferlegung eines Kraftfahrzeuges (1), insbesondere zur Spurverbreiterung und/oder zur Tieferlegung eines Quads oder eines ATVs, wobei das Distanzstück zwischen wenigstens einem mit einem Ende an einem Radträger des Kraftfahrzeuges (1) angelenkten Querlenker (4, 5) und einem Fahrgestellrahmen (9) anzuordnen ist, wobei das Distanzstück an wenigstens einem Befestigungsabschnitt (11) des Fahrgestellrahmens (9) für den Querlenker (4, 5) und an wenigstens einem Befestigungsabschnitt (12) des Querlenkers (4, 5) für den Fahrgestellrahmen (9) befestigbar ist und wobei durch das Distanzstück der vertikale Abstand a₁ und/oder der horizontale Abstand a₂ zwischen dem Befestigungsabschnitt (11) des Fahrgestellrahmens (9) für den Querlenker (4, 5) und dem Befestigungsabschnitt (12) des Querlenkers (4, 5) für den Fahrgestellrahmen (9) vergrößerbar ist, so daß durch Anordnen des Distanzstückes zwischen dem Querlenker (4, 5) und dem Fahrgestellrahmen (9) der Befestigungsabschnitt (12) des Querlenkers (4, 5) für den Fahrgestellrahmen (9) gegenüber dem Befestigungsabschnitt (11) des Fahrgestellrahmens (9) für den Querlenker (4, 5) nach außen und/oder nach oben verlagerbar ist.

2. Distanzstück nach Anspruch 1, **dadurch gekennzeichnet, daß** durch Anordnen des Distanzstückes zwischen dem Querlenker (4, 5) und dem Fahrgestellrahmen (9) der Befestigungsabschnitt (12) des Querlenkers (4, 5) für den Fahrgestellrahmen (9) gegenüber dem Befestigungsabschnitt (11) des Fahrgestellrahmens (9) für den Querlenker (4, 5) im Verhältnis 3 : 1 bis 5 : 1, vorzugsweise ca. 4 : 1, nach außen und nach oben verlagerbar ist.

3. Distanzstück nach Anspruch 1 oder 2, **dadurch gekennzeichnet, daß** der Querlenker (4, 5) zwei Lenkerarme (13, 14) aufweist, wobei jeder Lenkerarm (13, 14) an seinem Ende einen Befestigungsabschnitt (12) für den Fahrgestellrahmen (9) aufweist und wobei das Distanzstück an den Befestigungsabschnitten (12) der Lenkerarme (13, 14) und an Befestigungsabschnitten (11) des Fahrgestellrahmens (9) für die beiden Lenkerarme (13, 14) befestigbar ist.

4. Distanzstück nach einem der vorhergehenden Ansprüche, **dadurch gekennzeichnet, daß** das Distanzstück zwischen einem oberen Querlenker (4) und einem unteren Querlenker (5) und dem Fahrgestellrahmen (9) anzuordnen ist, wobei das Distanzstück an Befestigungsabschnitten (11) des Fahrgestellrahmens (9) für die Querlenker (4, 5) und an Befestigungsabschnitten (12) der Querlenker (4, 5) für den Fahrgestellrahmen (9) befestigbar ist.

5. Distanzstück nach einem der vorhergehenden Ansprüche, **dadurch gekennzeichnet, daß** zwei miteinander verbundene Montagebleche (17a, 17b) vorgesehen sind, wobei die Montagebleche (17a, 17b) eine im wesentlichen identische Außenkontur aufweisen und um 180° gedreht mit den Rückseiten miteinander verbunden sind.

6. Distanzstück nach einem der vorhergehenden Ansprüche, **dadurch gekennzeichnet, daß** jedes Montageblech (17a, 17b) vier kreuzförmig angeordnete Haltearme (15) mit endseitigen Halteabschnitten (2, 3) aufweist, wobei an jedem Halteabschnitt (2, 3) ein Lagerabschnitt (16) zur Befestigung mit einem Befestigungsabschnitt (11) an dem Fahrgestellrahmen (9) bzw. zur Lagerung des Befestigungsabschnitts (12) an einem Querlenker (4, 5) vorgesehen ist.

7. Distanzstück nach einem der vorhergehenden Ansprüche, **dadurch gekennzeichnet, daß** ein Lagerabschnitt (16) durch zwei gegenüber der Ebene des Montagebleches (17a, 17b) zur Vorderseite abgewinkelte Lagerschenkel (18) gebildet wird, wobei zwischen zwei Lagerschenkeln (18) ein U-förmiger Aufnahmebereich für einen Befestigungsabschnitt (12) des Lenkerarms (13, 14) bzw. ein Befestigungsbereich für einen Befestigungsabschnitt (11) des Fahrgestellrahmens (9) geschaffen ist und wobei die Schwenkachse (Y₁) bzw. die Befestigungsachse (Y₂) des Lagerabschnitts (16) im Bereich der freien Enden der Lagerschenkel (18) verläuft.

8. Distanzstück nach einem der vorhergehenden Ansprüche, **dadurch gekennzeichnet, daß** das Montageblech (17a, 17b) zwei mit Bezug auf eine vertikale Mittelachse (X₁) spiegelsymmetrisch ausgebildete Montageblechhälften (21, 22) aufweist.

9. Distanzstück nach einem der vorhergehenden Ansprüche, **dadurch gekennzeichnet, daß** das Montageblech (17a, 17b) zwei mit Bezug auf eine horizontale Mittelachse (X₂) nicht-spiegelsymmetrisch ausgebildete Montageblechabschnitte (23, 24) aufweist, wobei der Abstand a₃ der Lagerabschnitte (16) eines ersten Montageblechabschnitts (23) zur horizontalen Mittelachse (X₂) kleiner als der Abstand a₄ der Lagerabschnitte (16) eines zweiten Montage-blechabschnitts (24) zur horizontalen Mittelachse (X₂) ist.
